# EUROPÄISCHE PATENTSCHRIFT

(11) **EP 2 315 545 B1**
(45) Veröffentlichungstag und Bekanntmachung des Hinweises auf die Patenterteilung: **04.11.2020**
(21) Anmeldenummer: 09781008.9
(22) Anmeldetag: 24.07.2009
(51) Int. Cl.: A47L 15/42, A47L 15/48, A47L 15/00

(54) **SPÜLVERFAHREN FÜR EINE GESCHIRRSPÜLMASCHINE**
RINSING METHOD FOR A DISHWASHING MACHINE
PROCEDE DE RINÇAGE POUR UN LAVE-VAISSELLE

(30) Priorität: 25.07.2008 DE 102008040745
(43) Veröffentlichungstag der Anmeldung: 04.05.2011
(73) Patentinhaber: BSH Hausgeräte GmbH, 81739 München (DE)
(72) Erfinder: ROSENBAUER, Michael, 86756 Reimlingen (DE)
(86) Internationale Anmeldenummer: PCT/EP2009/059530
(87) Internationale Veröffentlichungsnummer: WO 2010/010166

(56) Entgegenhaltungen:
- EP-A2- 0 978 250
- WO-A1-2005/053504
- WO-A1-2005/063109
- WO-A1-2009/074415
- FR-A1- 2 483 767
- GB-A- 2 139 083

## Beschreibung

Die Erfindung betrifft ein Spülverfahren für eine Geschirrspülmaschine nach dem Oberbegriff des Patentanspruches 1.

Im Spülgang einer Geschirrspülmaschine wird mittels deren Steuereinrichtung ein Spülprogrammablauf, bestehend aus Teilprogrammschritten, nämlich Vorspülen, Reinigen, Zwischenspülen, Klarspülen und Trocknen, gesteuert. Der Trocknungsschritt kann nach dem Kondensationsprinzip oder mittels eines externen Trocknungssystems erfolgen, in dem die mit Feuchtigkeit beladene Luft aus dem Spülraum z. B. durch eine Sorptionskolonne geführt wird.

Aus der WO 2005/063109 A1 ist eine Geschirrspülmaschine bekannt, bei der in einem Trocknungsschritt die im Spülbehälter befindliche, mit Feuchtigkeit beladene Luft bzw. der Wasserdampf nach dem Kondensationsprinzip an den Seitenwänden des Spülbehälters kondensiert. An einer Wandung des Spülbehälters ist ein Wärmetauscher vorgesehen, der beim Trocknen mit kaltem Frischwasser befüllt wird, damit an der Spülbehälter-Wandung eine kalte Kondensationsfläche entsteht, wodurch die Trocknungsleistung erhöht wird. Das im Wärmetauscher zwischengespeicherte Frischwasser kann anschließend ohne Weiteres als Spülflüssigkeit weiterverwendet werden.

Im Vergleich zu dem oben erwähnten externen Trocknungssystem ist die nach dem Kondensationsprinzip erfolgende Trocknung zeitaufwendiger.

Die nachveröffentlichte WO 2009/074415 A1 zeigt ein Verfahren zur Erfassung der beladungsbedingten Wärmekapazitätsänderung eines wasserführenden Haushaltsgeräts, insbesondere einer Geschirrspülmaschine, zum Optimieren eines Trocknungsvorgangs, indem ein Temperaturverlauf während des Abkühlens des Spülguts erfasst wird.

Die Aufgabe der Erfindung besteht darin, ein Spülverfahren für eine Geschirrspülmaschine sowie eine Geschirrspülmaschine bereitzustellen, bei der die Trocknungszeit weiter verkürzt ist.

Die Aufgabe ist durch die Merkmale des Patentanspruches 1 gelöst. Bevorzugte Weiterbildungen der Erfindung sind in den Unteransprüchen offenbart.

Die Erfindung geht aus von einem Spülverfahren für eine Geschirrspülmaschine mit einem, einen Spülraum begrenzenden Spülbehälter, in welchem während oder nach Ausführung eines Spülgangs nicht mehr benötigte Spülflüssigkeit in einem thermisch mit dem Spülbehälter gekoppelten Speicherbehälter zwischengespeichert wird, und in einem Trocknungsschritt des Spülganges die in einem Spülraum des Spülbehälters befindliche, mit Feuchtigkeit beladene Luft bzw. der Wasserdampf an zumindest einer Seitenwand des Spülbehälters kondensiert wird,

Gemäß dem kennzeichnenden Teil des Patentanspruches 1 wird vor oder während des Trocknungsschrittes zur Bereitstellung einer Kondensationsfläche ein thermisch mit einer Spülbehälter-Seitenwand gekoppelter Speicherbehälter mit kaltem Frischwasser, d.h. Frischwasser, dessen Temperatur unterhalb der Raumtemperatur liegt, aus dem Frischwasserversorgungsnetz gefüllt. In dem an sich bekannten Speicherbehälter kann normalerweise während eines Spülganges nicht mehr benötigte Spülflüssigkeit zwischengespeichert werden, die dann in einem nachfolgenden Spülgang bzw. Spülzyklus etwa im Vorspülschritt einsetzbar ist. Auf diese Weise wird eine Wärmetauscherfläche bereitgestellt, wodurch die Kondensationstrocknung beschleunigt wird. Die Erfindung kann lediglich durch Anpassung der im Spülbetrieb erfolgenden Flüssigkeitsführung realisiert werden, ohne dass zusätzliche Wärmetauscher-Komponenten erforderlich sind.

Zur weiteren Beschleunigung des Trocknungsvorganges ist bevorzugt zumindest ein Wärmetauscher vorgesehen, der mit einer Spülbehälter-Seitenwand thermisch gekoppelt ist. Der Wärmetauscher kann ebenfalls während des Trocknungsschrittes mit kühlem Frischwasser gefüllt werden. Die Temperatur des aus dem Versorgungsnetz kommenden Frischwassers liegt üblicherweise in einem Bereich von 13 bis 15°C.

Der Wärmetauscher kann, wie auch der Speicherbehälter, während des Trocknungsschrittes mit Frischwasser gefüllt werden. Zur Bereitstellung einer weiteren Kondensationsfläche kann zusätzlich der Spülbehälter bis zu einem vorgegebenen Füllstand mit Frischwasser gefüllt werden. Insgesamt stellen daher zwei Spülbehälter-Seitenwände sowie der Spülbehälterboden bzw. die Wasseroberfläche des im Spülbehälter eingefüllten Frischwassers drei kalte Kondensationsflächen bereit.

In einer besonders vorteilhaften Verfahrensführung kann zunächst der Wärmetauscher mit Frischwasser gefüllt werden, wodurch die erste Spülbehälter-Seitenwand gekühlt wird. Anschließend kann nach einer vorgegebenen Verweildauer das im Wärmetauscher gespeicherte Frischwasser in den Spülbehälter entleert werden. Der Spülbehälter wird daher im Pumpentopfbereich mit dem, im Wärmetauscher zwischengespeicherten Frischwasser bis zum vorgegebenen Füllstand gefüllt. Gleichzeitig bleibt die erste Spülbehälter-Seitenwand trotz nunmehr entleertem Wärmetauscher für zumindest eine gewisse Zeitdauer ausreichend kühl. Es wird daher erfindungsgemäß mit derselben Frischwassermenge sowohl eine erste kalte Kondensationsfläche an der ersten Spülbehälter-Seitenwand als auch eine zweite Kondensationsfläche erzeugt, die durch den Wasserspiegel der in den Spülbehälter geleiteten Frischwassermenge gebildet ist.

In einem weiteren Verfahrensschritt kann das im Pumpentopfbereich des Spülbehälters befindliche Frischwasser in den Speicherbehälter weitergeleitet werden, der mit der zweiten Spülbehälter-Seitenwand thermisch gekoppelt ist. Bei dieser erfindungsgemäßen Verfahrensführung wird daher zunächst der Wärmetauscher mit Frischwasser gefüllt. Anschließend wird die Frischwassermenge vom Wärmetauscher über den Spülbehälter in den Speicherbehälter zirkuliert.

Insgesamt können bei dieser Verfahrensführung mit derselben Frischwassermenge drei Kondensationsflächen bereitgestellt werden. Die Verweildauer der Frischwassermenge im ersten Wärmetauscher, im Pumpentopfbereich und im Speicherbehälter ist derart eingestellt, dass eine ausreichende Abkühlung der Spülbehälter-Seitenwände bzw. des Pumpentopfbereiches erfolgen kann.

Zusätzlich ist es zur weiteren Reduzierung der Trocknungszeit von Vorteil, wenn der nach dem oben genannten ersten Verfahrensschritt entleerte Wärmetauscher erneut mit Frischwasser gefüllt wird, wodurch sich die der ersten Spülbehälter-Seitenwand zugeordnete Kondensationsfläche erneut abkühlt.

Nach der Ausführung des Trocknungsschrittes wird die im Wärmetauscher und/oder im Speicherbehälter zwischengespeicherte Frischwassermenge nicht mehr benötigt. Bevorzugt wird jedoch das zwischengespeicherte Frischwasser nicht mittels einer Laugenpumpe oder dergleichen abgepumpt, sondern bleibt dieses zur Wiederverwendung in einem nachfolgenden Spülgang bzw. Spülzyklus, etwa im Vorspülschritt oder im Reinigungsschritt des nachfolgenden Spülgangs, zwischengespeichert.

Nachfolgend ist ein Ausführungsbeispiel der Erfindung anhand der beigefügten Figuren beschrieben.

Es zeigen:
- Fig. 1: in einem schematischen Blockdiagramm eine Geschirrspülmaschine zur Durchführung des erfindungsgemäßen Spülverfahrens;
- Fig. 2: ein Temperatur-Zeit-Diagramm zur Veranschaulichung der in einem Spülgang durchgeführten Teilprogrammschritte;
- Fig. 3 bis 6: die erfindungsgemäße Flüssigkeitsführung während eines Trocknungsschrittes in einem Spülgang der Geschirrspülmaschine.

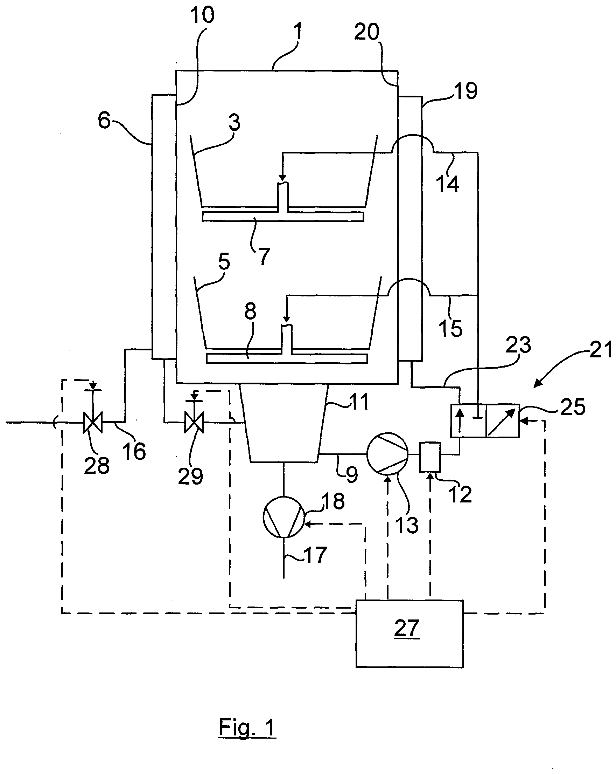

In der Fig. 1 ist schematisch eine Geschirrspülmaschine mit einem, einen Spülraum begrenzenden Spülbehälter 1 gezeigt. Im Spülraum des Spülbehälters 1 kann nicht dargestelltes, zu reinigendes Spülgut in Geschirrkörben 3, 5 angeordnet werden. Im gezeigten Spülbehälter 1 sind beispielhaft zwei in unterschiedlichen Sprühebenen vorgesehene Sprüharme 7, 8 angeordnet, über die das zu reinigende Spülgut mit Spülflüssigkeit beaufschlagt wird.

Im Spülbehälterboden ist ein Pumpentopf 11 mit zugeordneter Umwälzpumpe 13 vorgesehen, die über Zuleitungen 14, 15 strömungstechnisch mit den Sprüharmen 7, 8 verbunden ist. Der in einer Umwälzleitung 9 angeordneten Umwälzpumpe 13 ist ein Heizelement 12 nachgeschaltet, etwa ein Durchlauferhitzer, der auch als Wasserheizung bezeichnet wird. Der Pumpentopf 11 ist außerdem über Anschlussstutzen mit einer, mit dem Wasserversorgungsnetz gekoppelten Frischwasser-Zuleitung 16 verbunden. In der Frischwasser-Zuleitung 16 ist ein erster, als Speichertank dienenden Wärmetauscher 6 geschaltet, der thermisch gekoppelt in Anlage mit einer ersten Spülbehälter-Seitenwand 10 ist.

Der Pumpentopf 11 ist außerdem über einen weiteren Anschlussstutzen mit einer Ablaufleitung 17 in Verbindung, in der eine Laugenpumpe 18 zum Abpumpen von Spülflüssigkeit aus dem Spülbehälter 1 angeordnet ist.
Der Spülbehälter 1 weist weiter an seiner, in der Fig. 1 rechten Seitenwand 20 außenseitig einen Speicherbehälter bzw. einen sogenannten Flottenspeicher 19 auf, der ebenfalls thermisch gekoppelt in Anlage mit dem Spülbehälter 1 ist und als ein zweiter Wärmetauscher wirkt. Wie nachfolgend ausführlich beschrieben wird, kann in dem Flottenspeicher 19 Spülflüssigkeit zwischengespeichert werden, die nach Ausführung eines Teilprogrammschrittes, etwa dem Klarspülen K, nicht mehr benötigt wird. Die zwischengespeicherte Spülflüssigkeit wird im nachfolgenden Spülzyklus bzw. Spülgang etwa im Vorspülschritt V eingesetzt.

Die Umwälzleitung 9 bildet zusammen mit den Zuleitungen 14, 15 sowie dem Spülraum einen geschlossenen hydraulischen Kreislauf, in dem die Spülflüssigkeit bei den Teilprogrammschritten mit Flüssigkeitseinsatz zirkuliert und über die Sprüharme 7, 8 das Spülgut beaufschlagt. Stromab des in der Umwälzleitung 9 angeordneten Heizelementes 12 zweigt an einer Verzweigungsstelle 21 eine Verbindungsleitung 23 ab, die zum Flottenspeicher 19 führt. In der Verzweigungsstelle 21 ist eine Wasserweiche 25 vorgesehen, die hier beispielhaft als ein elektromagnetisch betätigbares Drei-Wege-Schaltventil 25 gezeigt ist. Das Drei-Wege-Schaltventil 25 verbindet in einer gezeigten ersten Schaltstellung die Umwälzleitung 9 mit der zum Flottenspeicher 19 führenden Verbindungsleitung 23 und unterbricht den oben erwähnten Hydraulikkreislauf. Demgegenüber ist in einer zweiten, nicht dargestellten Schaltstellung das Drei-Wege-Schaltventil 25 die Verbindung zum Flottenspeicher 19 unterbrochen, während die Umwälzleitung 9 mit den Zuleitungen 14, 15 verbunden ist.

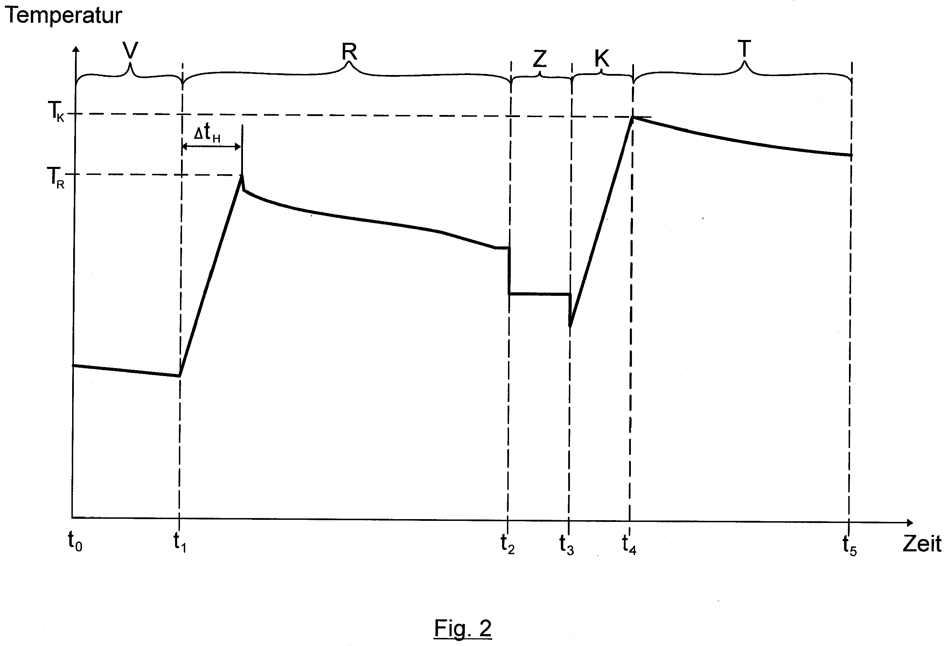

In der Fig. 2 ist ein Spülprogrammablauf der Geschirrspülmaschine anhand eines Temperatur-Zeit-Diagramms gezeigt. Der Programmablauf weist die einzelnen Teilprogrammschritte eines Spülganges, nämlich Vorspülen V, Reinigen R, Zwischenspülen Z, Klarspülen K sowie Trocknen T, auf. Dabei können bei Abwandlungen des Programmablaufs die Teilprogrammschritte Vorspülen V und/oder Zwischenspülen ausgeblendet sein. Die Teilprogrammschritte des Spülganges werden mittels einer Steuereinrichtung 27 durch entsprechendes Ansteuern der Gerätekomponenten ausgeführt. Dabei bezieht sich das Temperatur-Zeit-Profil auf eine Mischungstemperatur im Spülraum, die sich im Spülgut, im Spülbehälter und gegebenenfalls in der Spülflüssigkeit einstellt.

Nachfolgend ist der Spülgang der Geschirrspülmaschine, soweit er zum Verständnis der Erfindung erforderlich ist, anhand des Temperatur-Zeit-Profils der Fig. 2 beschrieben:
Nach dem Start des Spülganges zum Zeitpunkt t₀ erfolgt der Vorspülschritt V, bei dem Frischwasser über die Zuleitung 16 in den Hydraulikkreislauf eingeleitet wird. Die Temperatur des unmittelbar vom Wasserversorgungsnetz kommenden Frischwassers liegt bei ca. 15°C.

Damit im Vorspülschritt V bereits auf um Umgebungstemperatur vorgewärmtes Frischwasser einsetzbar ist, kann bereits im vorangegangenen Spülgang im Wärmetauscher 6 eine Frischwassermenge zwischengespeichert werden, die im darauffolgenden Spülgang zum Vorspülen V eingesetzt wird. Am Ende des Vorspülschrittes V, das heißt zum Zeitpunkt t₁, wird die Spülflüssigkeit mittels der Laugenpumpe 18 abgepumpt. Anschließend wird Frischwasser für den folgenden Reinigungsschritt R in dem Pumpentopfbereich des Spülbehälters 1 zugeführt. Der Reinigungsschritt R beginnt zum Zeitpunkt t₁ mit einer Aufheizphase Δt_{H}, in der die im Hydraulikkreislauf zirkulierende Spülflüssigkeit mit der Wasserheizung 12 auf eine Reinigungstemperatur T_{R} von ca. 50°C aufgeheizt wird. Während des Reinigungsschrittes R sind sowohl der Wärmetauscher 6 als auch der Flottenspeicher 19 entleert, das heißt mit Luft gefüllt, um die Wärmeisolierung des Spülraumes zu verbessern.

Am Ende des Reinigungsschrittes R, das heißt zum Zeitpunkt t₂, wird die Spülflüssigkeit aus dem Spülbehälter 1 in das Abwassersystem abgepumpt.

Anschließend wird im Zwischenspülschritt Z sowie im Klarspülschritt K jeweils Frischwasser zugeführt. Die während des Klarspülschrittes K im Hydraulikkreislauf umgewälzte Spülflüssigkeit wird außerdem mittels der Wasserheizung 12 bis auf eine Klarspültemperatur T_{K} von ca. 65°C hochgeheizt. Nach Ausführung des Klarspülschrittes K wird zum Zeitpunkt t₄ die Spülflüssigkeit abgeführt und beginnt der Trocknungsschritt T.

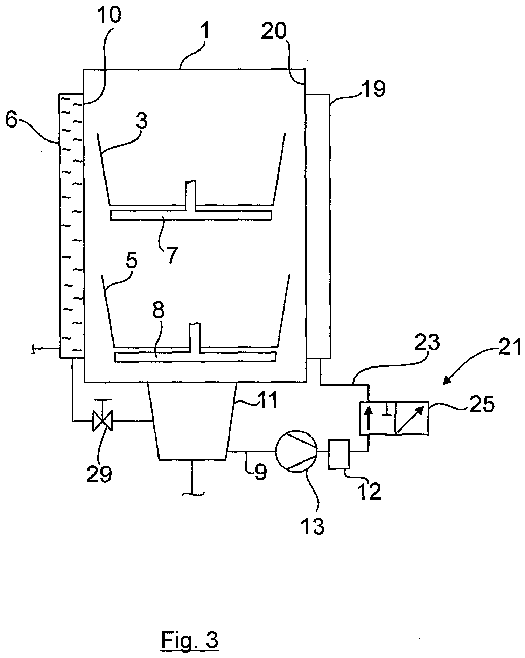

Die Trocknung des Spülgutes erfolgt hier unter Anwendung des Kondensationsprinzips, bei dem die mit Feuchtigkeit beladene Luft im Spülraum an Kondensationsflächen der Spülbehälter-Seitenwände 10, 20 kondensiert. Das zur Trocknung des Spülgutes erforderliche Zeitintervall t₄-t₅ wird durch die im folgenden erläuterte erfindungsgemäße Verfahrensführung reduziert, die anhand der Fig. 3 bis 6 veranschaulicht ist.

So wird zu Beginn des Trocknungsschrittes T in einem ersten Verfahrensschritt der erste Wärmetauscher 6 mit kaltem Frischwasser befüllt. Hierzu wird von der Steuereinrichtung 27 das Wassereinlaufventil 28 in der Frischwasser-Zuleitung 16 geöffnet, bis der Wärmetauscher 6 gefüllt ist, wie es in der Fig. 3 gezeigt ist. Eine Verweildauer des kalten Frischwassers im Wärmetauscher 6 ist so eingestellt, dass die Spülbehälter-Seitenwand 10 ausreichend gekühlt ist.

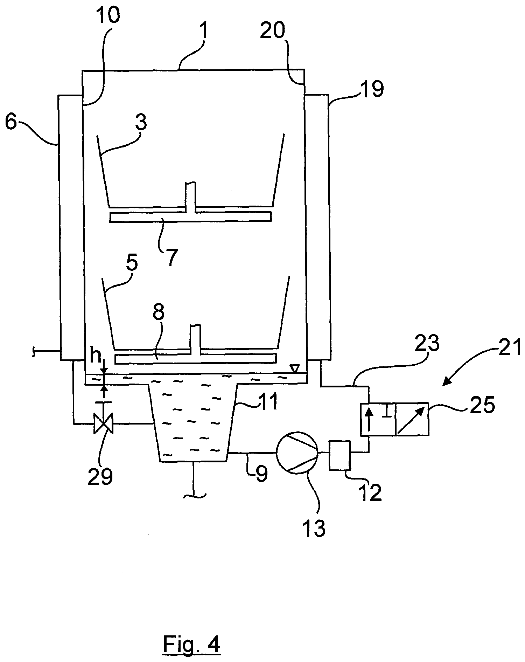

In einem zweiten Verfahrensschritt wird mittels der im ersten Wärmetauscher 6 zwischengespeicherten Frischwassermenge der Spülbehälter 1 bis zu einem Füllstand h gefüllt. Hierzu öffnet die Steuereinrichtung 27 das strömungstechnisch zwischen dem ersten Wärmetauscher 6 und dem Pumpentopf 11 geschaltete Sperrventil 29. Der Wärmetauscher 6 ist geodätisch in ausreichender Höhe angeordnet, so dass das darin gespeicherte Frischwasser unter Schwerkrafteinwirkung in den Pumpentopf 11 abfließt und den Spülbehälter 1 bis zu einem vorgegebenen Füllstand h füllt, wie es in der Fig. 4 gezeigt ist. Die den Spülraum nach unten begrenzende Wasseroberfläche wirkt als zusätzliche Kondensationsfläche. Gleichzeitig wird der Spülbehälterboden sowie der Pumpentopf 11 abgekühlt.

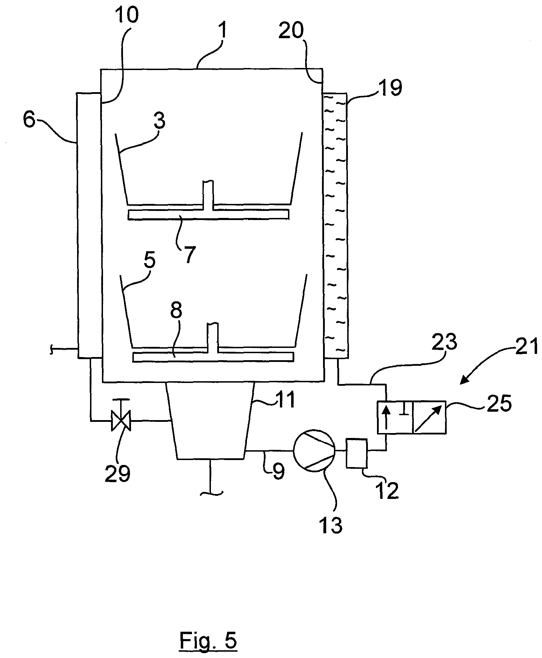

In einem weiteren Verfahrensschritt wird das im Spülbehälter 1 befindliche Frischwasser in den Flottenspeicher 19 geleitet. Hierzu setzt die Steuereinrichtung 27 die Umwälzpumpe 13 in Betrieb. Gleichzeitig stellt die Steuereinrichtung 27 das Drei-Wege-Schaltventil 25 in die, in der Fig. 4 gezeigte Schaltstellung, in der die Umwälzleitung 9 mit der zu dem Flottenspeicher 19 führenden Verbindungsleitung 23 verbunden ist. Dadurch wird das Frischwasser weiter in den Flottenspeicher 19 geleitet, wie es in der Fig. 5 gezeigt ist.

Das gemäß der Fig. 5 in den Flottenspeicher 19 gepumpte Frischwasser kühlt die zweite Spülbehälter-Seitenwand 20 ab, wodurch eine weitere kalte Kondensationsfläche bereitgestellt wird, an der die mit Feuchtigkeit beladene Luft kondensieren kann.

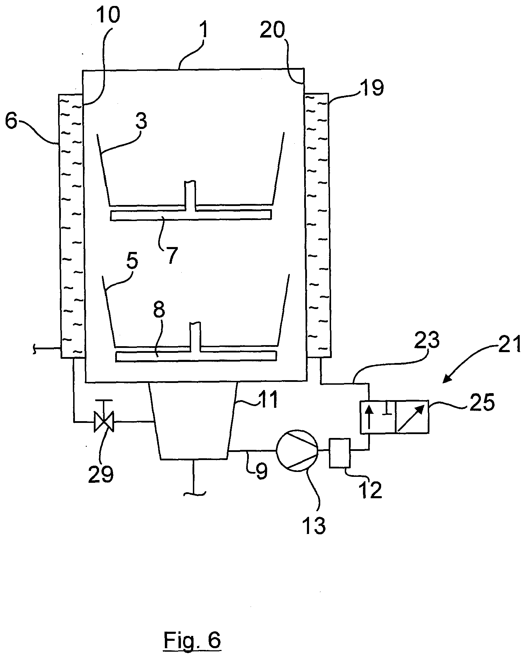

Die Trocknungseffizienz wird weiter erhöht, wenn der erste Wärmetauscher 6 wieder mit neuem, kalten Frischwasser gefüllt wird, wie es in der Fig. 6 gezeigt ist. Auf diese Weise erfolgt eine nochmalige Abkühlung der ersten Spülbehälter-Seitenwand 10. Alternativ hierzu kann der erste Wärmetauscher 6 bereits in dem, in der Fig. 4 gezeigten Verfahrensschritt, das heißt unmittelbar nach seinem Entleeren, wieder mit Frischwasser gefüllt werden. Auf diese Weise ist gleichzeitig sowohl im ersten Wärmetauscher 6 als auch im zweiten Wärmetauscher 19 jeweils eine Frischwassermenge vorgesehen.

Nach Ausführung des Trocknungsschrittes T kann das Frischwasser bis zum nachfolgenden Spülgang im ersten Wärmetauscher 6 sowie im Flottenspeicher 19 verbleiben. Im nachfolgenden Spülgang kann das Frischwasser dann insbesondere im Vorspülschritt V oder im Reinigungsschritt R wiederverwendet werden.

### BEZUGSZEICHENLISTE

- 1: Spülbehälter
- 3: Geschirrkorb
- 5: Geschirrkorb
- 6: erster Wärmetauscher
- 7: Sprüharm
- 8: Sprüharm
- 9: Umwälzleitung
- 10: erste Spülbehälter-Seitenwand
- 11: Pumpentopf
- 12: Heizelement
- 13: Umwälzpumpe
- 14: Zuleitung
- 15: Zuleitungen
- 16: Frischwasser-Zuleitung
- 17: Ablaufleitung
- 18: Laugenpumpe
- 19: Speicherbehälter
- 20: zweite Spülbehälter-Seitenwand
- 21: Verzweigungsstelle
- 23: Verbindungsleitung
- 25: Drei-Wege-Schaltventil
- 27: Steuereinrichtung
- 28: Wassereinlaufventil
- 29: Sperrventil
- Δt_{H}: Aufheizphase
- V: Vorspülen
- R: Reinigen
- Z: Zwischenspülen
- K: Klarspülen
- T: Trocknen

## Patentansprüche

1. Spülverfahren für eine Geschirrspülmaschine mit einem, einen Spülraum begrenzenden Spülbehälter (1), in welchem während oder nach Ausführung eines Spülgangs nicht mehr benötigte Spülflüssigkeit in einem thermisch mit dem Spülbehälter (1) gekoppelten Speicherbehälter (19) zwischengespeichert wird, und in einem Trocknungsschritt (T) des Spülganges die in einem Spülraum des Spülbehälters (1) befindliche, mit Feuchtigkeit beladene Luft bzw. der Wasserdampf an zumindest einer Seitenwand (10, 20) des Spülbehälters (1) kondensiert wird, wobei vor oder während des Trocknungsschrittes (T) zur Bereitstellung einer Kondensationsfläche der Speicherbehälter (19) mit Frischwasser gefüllt wird, und wobei nach Ausführung des Trocknungsschrittes (T) das im Speicherbehälter (19) zwischengespeicherte Frischwasser in einem nachfolgenden Spülgang bzw. Spülzyklus wiederverwendet wird.

2. Spülverfahren nach Anspruch 1, **dadurch gekennzeichnet, dass** während des Trocknungsschrittes (T), vorzugsweise in einem ersten Verfahrensschritt, ein mit einer ersten Spülbehälter- Seitenwand (10) thermisch gekoppelter Wärmetauscher (6) mit Frischwasser gefüllt wird zur Kühlung einer ersten Spülbehälter- Seitenwand (10).

3. Spülverfahren nach Anspruch 1 oder 2, **dadurch gekennzeichnet, dass** während des Trocknungsschrittes (T) der Spülbehälter (1) bis zu einem vorgegebenen Füllstand (h) mit Frischwasser gefüllt wird.

4. Spülverfahren nach Anspruch 2 oder 3, **dadurch gekennzeichnet, dass** in einem zweiten Verfahrensschritt das im Wärmetauscher (6) zwischengespeicherte Frischwasser in den Spülbehälter (1) bis zum Füllstand (h) gefüllt wird.

5. Spülverfahren nach einem der Ansprüche 2 bis 4, **dadurch gekennzeichnet, dass** in einem, vorzugsweise in einem nach dem ersten Verfahrensschritt folgenden weiteren Verfahrensschritt das im Spülbehälter (1) befindliche Frischwasser in den Speicherbehälter (19) weitergeleitet wird zur Kühlung einer zweiten Spülbehälter-Seitenwand (20).

6. Spülverfahren nach einem der Ansprüche 2 bis 5, **dadurch gekennzeichnet, dass** der nach dem ersten Verfahrensschritt entleerte Wärmetauscher (6) während der Trocknung (T) erneut mit Frischwasser gefüllt wird.

7. Spülverfahren nach einem der vorhergehenden Ansprüche, **dadurch gekennzeichnet, dass** das nach Ausführung des Trocknungsschrittes (T) im Wärmetauscher (6) zwischengespeicherte Frischwasser in einem nachfolgenden Spülgang bzw. Spülzyklus wiederverwendet wird.

8. Geschirrspülmaschine mit einer Steuereinrichtung (27) zur Durchführung des Spülverfahrens nach einem der vorhergehenden Ansprüche.

## Claims

1. Washing method for a dishwasher having a wash container (1) that delimits a wash compartment, in which wash liquid that is no longer required during or after execution of a wash operation is buffered in a storage container (19) coupled thermally to the wash container (1), and in a drying step (T) of the wash operation the moisture-laden air or water vapour in a wash compartment of the wash container (1) is condensed on at least one side wall (10, 20) of the wash container (1), wherein before or during the drying step (T) the storage container (19) is filled with fresh water in order to provide a condensation surface, and wherein after execution of the drying step (T) the fresh water buffered in the storage container (19) is reused in a subsequent wash operation or wash cycle.

2. Washing method according to claim 1, **characterised in that** during the drying step (T), preferably in a first method step, a heat exchanger (6) coupled thermally to a first wash container side wall (10) is filled with fresh water to cool a first wash container side wall (10).

3. Washing method according to claim 1 or 2, **characterised in that** during the drying step (T) the wash container (1) is filled up to a predetermined fill level (h) with fresh water.

4. Washing method according to claim 2 or 3, **characterised in that** in a second method step the fresh water buffered in the heat exchanger (6) is introduced into the wash container (1) up to the fill level (h).

5. Washing method according to one of claims 2 to 4, **characterised in that** in a further method step, which preferably follows the first method step, the fresh water in the wash container (1) is conducted on into the storage container (19) to cool a second wash container side wall (20).

6. Washing method according to one of claims 2 to 5, **characterised in that** the heat exchanger (6), which is emptied after the first method step, is filled with fresh water again during drying (T).

7. Washing method according to one of the preceding claims, **characterised in that** after execution of the drying step (T) fresh water buffered in the heat exchanger (6) is reused in a subsequent wash operation or wash cycle.

8. Dishwasher having a control facility (27) to implement the washing method according to one of the preceding claims.

## Revendications

1. Procédé de rinçage pour un lave-vaisselle comportant une cuve de rinçage (1) délimitant un espace de rinçage, cuve de rinçage dans laquelle pendant ou après la réalisation d'un processus de rinçage un liquide de rinçage qui n'est plus nécessaire est stocké de manière intermédiaire dans une cuve de stockage (19) couplée thermiquement avec la cuve de rinçage (1), et lors d'une étape de séchage (T) du processus de rinçage l'air chargé d'humidité resp. la vapeur d'eau qui se trouve dans un espace de rinçage de la cuve de rinçage (1) est condensé au niveau d'au moins une paroi latérale (10, 20) de la cuve de rinçage (1), dans lequel avant ou pendant l'étape de séchage (T) de manière à mettre à disposition d'une surface de condensation la cuve de stockage (19) est remplie d'eau fraîche, et dans lequel après la réalisation de l'étape de séchage (T) l'eau fraîche stockée de manière intermédiaire dans la cuve de stockage (19) est réutilisée dans un processus de rinçage resp. un cycle de rinçage consécutif.

2. Procédé de rinçage selon la revendication 1, **caractérisé en ce que** pendant l'étape de séchage (T), de préférence lors d'une première étape de procédé, un échangeur de chaleur (6) couplé thermiquement à une première paroi latérale de cuve de rinçage (10) est rempli d'eau fraîche de manière à refroidir une première paroi latérale de cuve de rinçage (10).

3. Procédé de rinçage selon la revendication 1 ou 2, **caractérisé en ce que** pendant l'étape de séchage (T) la cuve de rinçage (1) est remplie d'eau fraîche jusqu'à un niveau de remplissage prédéfini (h).

4. Procédé de rinçage selon la revendication 2 ou 3, **caractérisé en ce que** lors d'une seconde étape de procédé l'eau fraîche stockée de manière intermédiaire dans l'échangeur de chaleur (6) remplit la cuve de rinçage (1) jusqu'à l'état de remplissage (h).

5. Procédé de rinçage selon l'une des revendications 2 à 4, **caractérisé en ce que** lors d'une autre étape de procédé, de préférence consécutive à la première étape de procédé, l'eau fraîche qui se trouve dans la cuve de rinçage (1) est envoyée dans la cuve de stockage (19) de manière à refroidir une seconde paroi latérale de cuve de rinçage (20).

6. Procédé de rinçage selon l'une des revendications 2 à 5, **caractérisé en ce que** l'échangeur de chaleur (6) vidé après la première étape de procédé est de nouveau rempli d'eau fraîche pendant le séchage (T).

7. Procédé de rinçage selon l'une des revendications précédentes, **caractérisé en ce que** l'eau fraîche stockée de manière intermédiaire dans l'échangeur de chaleur (6) après la réalisation de l'étape de séchage (T) est réutilisée lors d'un processus de rinçage resp. un cycle de rinçage consécutif.

8. Lave-vaisselle comportant un dispositif de commande (27) destiné à la mise en œuvre du procédé de rinçage selon l'une quelconque des revendications précédentes.
